# EUROPEAN PATENT APPLICATION

(11) **EP 4 266 707 A2**
(43) Date of publication of application: **25.10.2023**
(21) Application number: 23168277.4
(22) Date of filing: 17.04.2023
(51) Int. Cl.: H04S 7/00, H04R 29/00

(54) **INDIVIDUALIZED AUTOMATIC AUDIO SYSTEM ADJUSTMENT USING INTEGRATED MICROPHONES**

(30) Priority: 19.04.2022 US 202217723950
(71) Applicant: BlackBerry Limited, Waterloo, Ontario N2K 0A7 (CA)
(72) Inventor: HAMME, Bradford James, Ontario, N2K 0A7 (CA)
(74) Representative: MERH-IP Matias Erny Reichl Hoffmann Patentanwälte PartG mbB

(57) **Abstract**

Systems and methods (600) are disclosed for identifying at least one cause of noise in a vehicle audio system. The vehicle audio system includes a plurality of audio channels. Acoustic output is generated (610) and received (620) through each of the audio channels. Acoustic input is received (620) from one or more of the audio channels and is processed (630) to generate processed acoustic input. The processed acoustic input includes a frequency response of the acoustic input. The processed acoustic input is compared (640) to corresponding channel target input and at least one deviation is determined (650). A cause of the at least one deviation is then determined based on a relationship between the at least one deviation and a set of resolved indications of cause, each of the set of resolved indications of cause corresponding to at least one of a set of recorded causes (660).

## Description

### FIELD

The present application generally relates to vehicle audio systems and, in particular, to systems and methods for identifying at least one cause of noise in vehicle audio systems.

### BACKGROUND

Most vehicles contain audio systems which enhance the aural experience for vehicle occupants. Vehicle audio systems require careful calibration, tuning, adjustment, and evaluation in order to function properly.

At present, vehicle audio system testing is often performed on prototype vehicles using tedious and time-consuming techniques, and the results are then universally applied to the vehicle audio systems of production vehicles. This practice has led to suboptimal audio performance in production vehicles, as variation among each vehicle audio system cannot be accounted for by simply testing a prototype. Furthermore, many manufacturers have begun eliminating prototype vehicles, creating uncertainty in the future of vehicle audio system testing.

Thorough and accurate means for performing vehicle audio system testing on production vehicles is lacking, as are efficient means for determining the cause of any discovered issues. Improvements to the field are desired.

### BRIEF DESCRIPTION OF THE DRAWINGS

Reference will now be made, by way of example, to the accompanying drawings which show example embodiments of the present application, and in which:
FIG. 1 illustrates a simplified block design of a vehicle audio system 100, in accordance with an example of the present application;
FIG. 2 illustrates a top sectional view of a vehicle 200, in accordance with an example of the present application;
FIG. 3 shows a simplified high-level block diagram of a computing device, in accordance with an example of the present application;
FIG. 4 depicts a simplified software organization of the computing device of FIG. 3;
FIG. 5 is a schematic operation diagram illustrating an operating environment of an example embodiment;
FIG. 6 illustrates, in flowchart form, a method of identifying at least one cause of noise in a vehicle audio system, in accordance with an example of the present application;
FIG. 7 illustrates, in flowchart form, a method of identifying at least one cause of noise in a vehicle audio system, in accordance with another example of the present application; and
FIG. 8 is a flowchart of illustrating a method of receiving and storing a resolved indication of known cause and a corresponding recorded cause, in accordance with an example of the present application.

Similar reference numerals may have been used in different figures to denote similar components.

### DESCRIPTION OF EXAMPLE EMBODIMENTS

In accordance with one aspect of the present application, there is provided a system for identifying at least one cause of noise in a vehicle audio system, the vehicle audio system including a plurality of audio channels, the system comprising: one or more microphones; a processor; a memory storing processor executable instructions that, when executed by the processor, cause the processor to generate acoustic output; and for each channel of the plurality of audio channels: receive, from the one or more microphones, acoustic input; process the acoustic input to generate processed acoustic input, the processed acoustic input including a frequency response of the acoustic input; compare the processed acoustic input to corresponding channel target input; determine at least one deviation between the processed acoustic input and the corresponding target channel input; and determine a cause of the at least one deviation based on a relationship between the at least one deviation and a set of resolved indications of cause, each of the set of resolved indications of cause corresponding to at least one of a set of recorded causes.

In some implementations, the one or more microphones are a pair of binaural microphones.

In some implementations, the processor is further caused to identify at least one of the set of resolved indications of cause corresponding to the at least one deviation; and identify at least one of the set of recorded causes corresponding to the at least one of the set of resolved indications of cause.

In some implementations, the processor is further caused to generate a report identifying the at least one of the set of recorded causes; and store the report in a memory.

In some implementations, the processor is further caused to determine that the at least one deviation does not correspond to any of the set of resolved indications of cause; and store the at least one deviation in a set of discovered indications of cause.

In some implementations, the set of resolved indications of cause and the set of recorded causes are stored in a database, and the processor is further caused to: prior to generating acoustic output, receive a resolved indication of cause and a corresponding recorded cause; and store the resolved indication of cause and the corresponding recorded cause in the database.

In some implementations, the processor is further caused to: prior to processing the acoustic input to generate processed acoustic input, determine an absence of a no sound condition.

In some implementations, the processor is further caused to: prior to generating acoustic output, receive from one or more microphones, a reference acoustic input; and process the reference acoustic input to generate processed reference acoustic input; the processed reference acoustic input including a Noise Floor Reduction (NFR). IN some such implementations, the absence of a no sound condition is determined by comparing the frequency response of the acoustic input to the NFR.

In some implementations, processing the acoustic input includes comparing the acoustic input to target acoustic input.

In some implementations, the target acoustic input is determined by prototype reference measurements.

In accordance with another aspect of the present application, there is provided a method for identifying at least one cause of noise in a vehicle audio system. The vehicle audio system may include a plurality of audio channels. The method may comprise: through each channel of the plurality of audio channels: generating acoustic output; receiving, from one or more microphones, acoustic input; processing the acoustic input to generate processed acoustic input, the processed acoustic input including a frequency response of the acoustic input; comparing the processed acoustic input to corresponding channel target output; determining at least one deviation between the processed acoustic input and the corresponding target channel input; and determining a cause of the at least one deviation based on a relationship between the at least one deviation and a set of resolved indications of cause, each of the set of resolved indications of cause corresponding to at least one of a set of recorded causes.

In some implementations, the one or more microphones are a pair of binaural microphones.

In some implementations, the method further comprises identifying at least one of the set of resolved indications of cause corresponding to the at least one deviation; and identifying at least one of the set of recorded causes corresponding to the at least one of the set of resolved indications of cause.

In some implementations, the method further comprises generating a report identifying the at least one of the set of recorded causes; and storing the report in a memory.

In some implementations, the method further comprises determining that the at least one deviation does not correspond to any of the set of resolved indications of cause; and storing the deviation in a set of indications of discovered cause.

In some implementations, the set of resolved indications of cause and the set of recorded causes are stored in a database, and the method further comprises: prior to generating acoustic output, receiving a resolved indication of known cause and a corresponding recorded cause; and storing the resolved indication of known cause and the corresponding recorded cause in the database.

In some implementations, the method further comprises: prior to processing the acoustic input to generate processed acoustic input, determining an absence of a no sound condition.

In some implementations, the method further comprises: prior to generating acoustic output, receiving from one or more microphones, a reference acoustic input; and processing the reference acoustic input to generate processed reference acoustic input; the processed reference acoustic input including a Noise Floor Reduction (NFR); and wherein the absence of a no sound condition is determined by comparing the frequency response of the acoustic input to the NFR.

In some implementations, processing the acoustic input includes comparing the acoustic input to target acoustic input.

In accordance with yet another aspect of the present application, there is provided a non-transitory computer-readable storage medium storing instructions, that when executed by a processor cause the processor to: generate acoustic output; receive, from one or more microphones, acoustic input; process the acoustic input to generate processed acoustic input, the processed acoustic input including a frequency response of the acoustic input; compare the processed acoustic input to corresponding channel target input; determine at least one deviation between the processed acoustic input and the corresponding target channel input; and determine a cause of the at least one deviation based on a relationship between the at least one deviation and a set of resolved indications of cause, each of the set of resolved indications of cause corresponding to at least one of a set of recorded causes.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... or..." is intended to cover any one or more of the listed elements, including any one of the listed elements alone, any sub-combination, or all of the elements, without necessarily excluding any additional elements, and without necessarily requiring all of the elements.

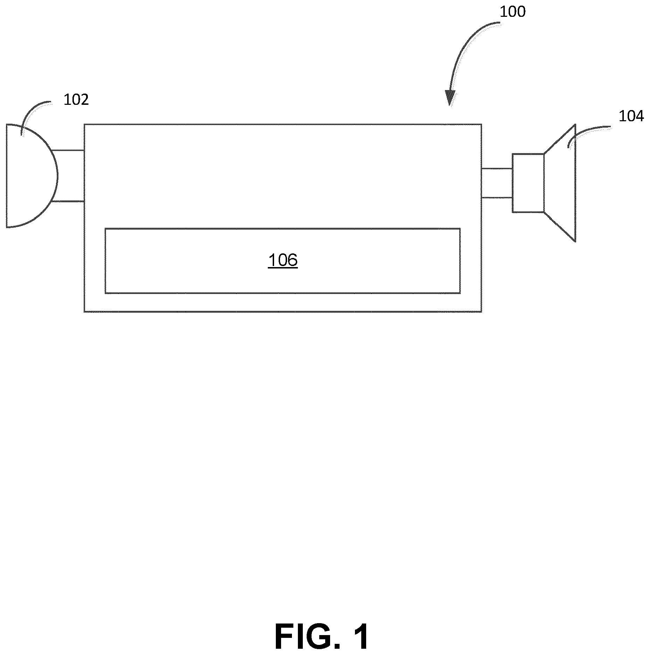

FIG. 1 shows a simplified block design of a vehicle audio system 100, as may be found in a vehicle. The vehicle audio system 100 includes at least one microphone 102, at least one loudspeaker 104, and a vehicle computing device 106.

The vehicle audio system 100 may be an audio system of a variety of vehicles-*i.e*., an integrated audio system of a vehicle. Vehicles includes motor vehicles (*e.g.,* automobiles, cars, trucks, buses, motorcycles, etc.), aircraft (*e.g.,* airplanes, unmanned aerial vehicles, unmanned aircraft systems, drones, helicopters, etc.), spacecraft (e.g., spaceplanes, space shuttles, space capsules, space stations, satellites, etc.), watercraft (e.g., ships, boats, hovercraft, submarines, etc.), railed vehicles (e.g., trains and trams, etc.), and other types of vehicles including any combinations of any of the foregoing, whether currently existing or after arising.

The vehicle audio system 100 is situated in or in communication with an environment. The environment may correspond to the operating environment of the vehicle audio system 100. For example, the environment may be the interior (*e.g.,* the cabin) of a vehicle. One or both of the at least one microphone 102 and the at least one loudspeaker 104 may be situated in or in communication with the environment. In other words, the environment may be considered a "playback" and/or a "recording" environment.

The at least one microphone 102 includes one or more microphones and may be an array of microphones such as, for example, an in-vehicle array of microphones where the environment is a vehicle cabin. As another example, the at least one microphone may be a pair of binaural microphones. The at least one microphone 102 is for capturing audio from the environment.

The at least one loudspeaker 104 includes one or more loudspeaker and may be an array of speakers such as, for example, an in-vehicle set of speakers where the environment is a vehicle cabin. The at least one loudspeaker 104 is for presenting audio to the environment.

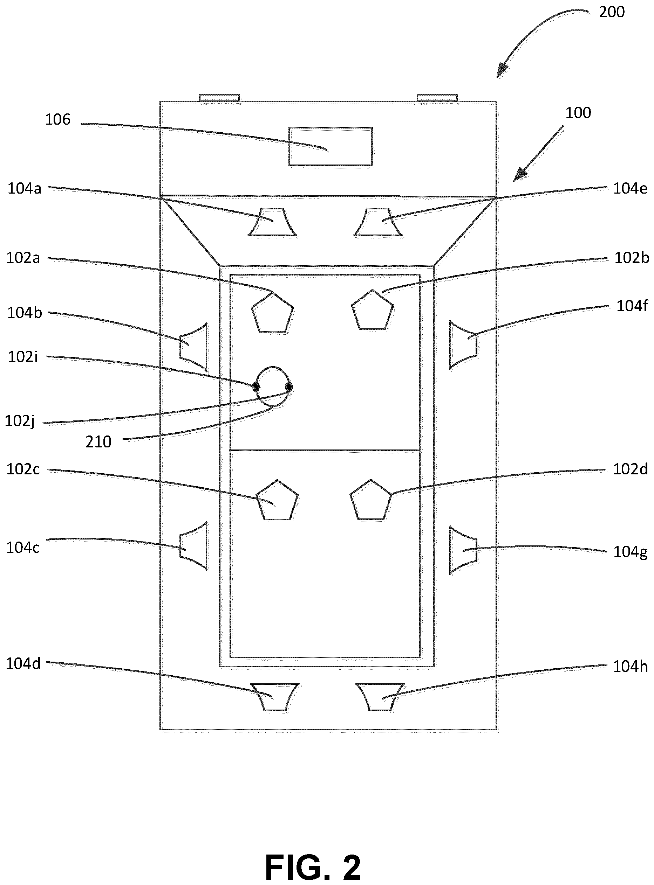

Reference is now to FIG. 2, which illustrates a top sectional view of a vehicle 200 having a vehicle audio system 100 (FIG. 1) installed therein. A vehicle computing device 106 is shown beneath the hood of the vehicle 200. However, in some implementations, the vehicle computing device 106 may be positioned at another location within the vehicle 200.

As further shown in FIG. 2, a plurality of loudspeakers are installed about the vehicle 200. The loudspeakers are illustrated as a first loudspeaker 104a, a second loudspeaker 104b, a third loudspeaker 104c, a fourth loudspeaker 104d, a fifth loudspeaker 104e, a sixth loudspeaker 104f, a seventh loudspeaker 104g, and an eighth loudspeaker 104h. Eight discrete loudspeakers are illustrated in FIG. 2; however, any number of loudspeakers may be included in the vehicle 200. The loudspeakers are illustrated to be positioned about a perimeter of the vehicle occupant cabin; however, in some examples, the loudspeakers can be installed at locations inward of the perimeter of the vehicle occupant cabin.

As still further shown in FIG. 2, a plurality of microphones are installed about the vehicle. For example, a first microphone 102a is installed for detecting and receiving acoustic input. Due in part to proximal location, acoustic speech from the vehicle driver may be best detected by the first microphone 102a. Similarly, a second microphone 102b may best detect acoustic speech from a front passenger. A third microphone 102c may best detect acoustic speech from a rear left passenger. A fourth microphone 102d may best detect acoustic speech from a rear right passenger. The first, second, third fourth and fifth microphones 102a-d may be integrated microphones. While the microphones are illustrated to be positioned to detect acoustic speech of passengers, in some examples, the microphones may be placed elsewhere.

Additionally or alternatively, a pair of binaural microphones 102ij may be provided inside the vehicle cabin. In some embodiments, a dummy head 210 may be provided and each binaural microphone 102ij of a pair of binaural microphones 102ij may be placed in a position approximate to the position of an ear on each side of the dummy head 210. In some implementations, the dummy head 210 and the binaural microphones 102ij may comprise a single unit. In some implementations, the binaural microphones 102ij may be considered as a single point of an audio channel.

Use of the binaural microphones 102ij may reproduce the conditions of human hearing through the implementation of binaural recording. Binaural recording is a method of recording sound using two microphones mounted in a dummy head, inset in ear-shaped molds. The microphones capture the audio frequency that naturally occurs as sound wraps around the human head and is "shaped" by the form of the outer and inner ear.

As previously described, an audio channel is a representation of sound coming from or going to a single point. In implementations where a communication system includes multiple loudspeakers and/or microphones, (such as that shown in FIG. 2), multiple audio channels may be produced by the vehicle computing device 106. For example, sound coming from the first loudspeaker 104a and received by the binaural microphones 102ij (represented as a single point) may represent a first audio channel. As another example, sound coming from the second loudspeaker 104b and received by the binaural microphones 102ij (represented as a single point) may represent a second audio channel. The vehicle computing device 106 may generate acoustic output and receive acoustic input through one or more audio channels. The vehicle computing device 106 may then process the received acoustic input. As further described below, the vehicle computing device may use the processed acoustic input to identify noise in the vehicle, and to further identify one or more causes of the noise.

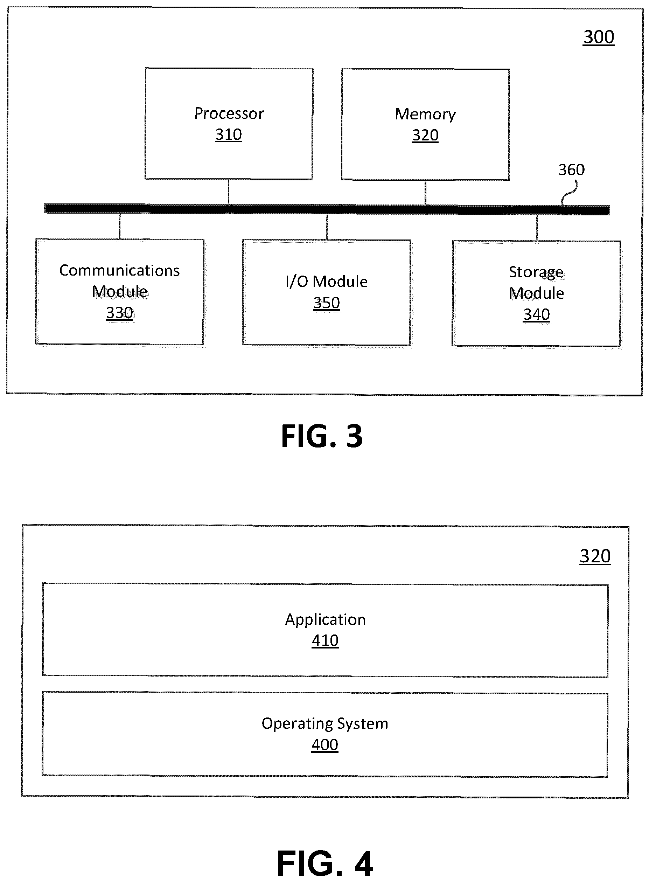

The vehicle computing device 106 is a computing device. An example computing device will now be described with reference to FIG. 3.

FIG. 3 provides a simplified high-level block diagram of an example computing device 300. The example computing device 300, which may be a vehicle computing device 106 (FIG. 1), includes a variety of modules. For example, as illustrated, the example computing device 300 may include a processor 310, a memory 320, a communications module 330, and/or an I/O module 350 and/or a storage module 340. As illustrated, the foregoing example modules of the example computing device 300 are in communication over a bus 360.

The processor 310 is or includes a hardware processor and may, for example, be or include one or more processors using ARM, x86, MIPS, or PowerPC (TM) instruction sets. For example, the processor 310 may be or include Qualcomm (TM) Snapdragon (TM) processors, Intel (TM) Core (TM) processors, or the like.

The memory 320 may include random access memory, read-only memory, persistent storage such as, for example, flash memory, a solid-state drive or the like. Read-only memory and persistent storage are a computer-readable medium and, in particular, may be considered examples of non-transitory computer-readable storage media. A computer-readable medium may be organized using a file system such as may be administered by an operating system governing overall operation of the example computing device 300.

The communications module 330 allows the example computing device 300 to communicate with other computing devices and/or various communications networks. For example, the communications module 330 may allow the example computing device 300 to send or receive communications signals. Communications signals may be sent or received according to one or more protocols or according to one or more standards. For example, the communications module 330 may allow the example computing device 300 to communicate via a cellular data network, such as for example, according to one or more standards such as, for example, Global System for Mobile Communications (GSM), Code Division Multiple Access (CDMA), Evolution Data Optimized (EVDO), Long-term Evolution (LTE) or the like. Additionally or alternatively, the communications module 330 may allow the computing device 300 to communicate via Wi-Fi (TM), using Bluetooth (TM) or via some combination of one or more networks or protocols. All or a portion of the communications module 330 may be integrated into a component of the example computing device 300. For example, the communications subsystem may be integrated into a communications chipset.

The I/O module 350 provides for input to and output from the example computing device 300. The I/O module 350 may be coupled to and/or in communication with one or more input or output devices. For example, the I/O module 350 may serve to couple the example computing device 300 to the at least one microphone 102 (FIG. 1, FIG. 2) and/or the at least one loudspeaker 104 (FIG. 1, FIG. 2), either directly or indirectly such, as for example, through suitable analog and/or digital electronics such as, for example, an amplifier, a pre-amplifier, one or more filters, etc. In a particular example, the I/O module 350 may include or may be in communication with an analog-to-digital convertor (ADC) and/or a digital-to-analog convertor (DAC) such as may allow analog audio signals to be converted digital audio signals and *vice-versa,* respectively. For example, the at least one microphone 102 may provide analog signals that are converted to digital audio signals by way of an ADC. In another example, the at least one loudspeaker 104 may be adapted to receive analog signals and such signals may be provided based on digital audio signals by way of a DAC.

The communications module 330 allows the example computing device 300 to communicate with other computing devices and/or various communications networks. For example, the communications module 330 may allow the example computing device 300 to send or receive communications signals. Communications signals may be sent or received according to one or more protocols or according to one or more standards. For example, the communications module 330 may allow the example computing device 300 to communicate via a cellular data network, such as for example, according to one or more standards such as, for example, Global System for Mobile Communications (GSM), Code Division Multiple Access (CDMA), Evolution Data Optimized (EVDO), Long-term Evolution (LTE) or the like. Additionally, or alternatively, the communications module 330 may allow the example computing device 300 to communicate using near-field communication (NFC), via WiFi^{™}, using Bluetooth^{™}, or via some combination of one or more networks or protocols. In some embodiments, all or a portion of the communications module 330 may be integrated into a component of the example computing device 300. For example, the communications module may be integrated into a communications chipset.

The storage module 340 allows the example computing device 300 to store and retrieve data. In some embodiments, the storage module 340 may be formed as a part of the memory 320 and/or may be used to access all or a portion of the memory 320. Additionally, or alternatively, the storage module 340 may be used to store and retrieve data from persisted storage other than the persisted storage (if any) accessible via the memory 320. In some embodiments, the storage module 340 may be used to store and retrieve data in a database. A database may be stored in persisted storage. Additionally, or alternatively, the storage module 340 may access data stored remotely such as, for example, as may be accessed using a local area network (LAN), wide area network (WAN), personal area network (PAN), and/or a storage area network (SAN). In some embodiments, the storage module 340 may access data stored remotely using the communications module 330. In some embodiments, the storage module 340 may be omitted and its function may be performed by the memory 320 and/or by the processor 310 in concert with the communications module 330 such as, for example, if data is stored remotely. The storage module 340 may also be referred to as a data store.

Software comprising instructions is executed by the processor 310 from a computer-readable medium. For example, software may be loaded into random-access memory from persistent storage of the memory 320. Additionally or alternatively, instructions may be executed by the processor 310 directly from read-only memory of the memory 320.

FIG. 4 depicts a simplified organization of software components stored in the memory 320 of the example computing device 300 (FIG. 3). As illustrated these software components include an operating system 400 and an application 410.

The operating system 400 comprises software and may comprise, for example, software such as, for example, QNX (TM), Android (TM), Linux (TM), Apple (TM) iOS (TM), Microsoft (TM) Windows (TM), or the like. The operating system 400 controls the overall operation of the example computing device 300 (FIG. 3) and allows the application 410 to access the processor 310 (FIG. 2), the memory 320, the communications module 330, and the I/O module 350.

The application 410, comprises software that, in combination with the operating system 400, adapts the example computing device 300 (FIG. 3) to operate as a device for various purposes. For example, the application 410 may cooperate with the operating system 400 to adapt the example computing device 300 to process acoustic output and/or to identify noise in a vehicle audio system under control of the processor 310 (FIG. 3).

As mentioned above, the vehicle audio system 100 (FIG. 1), and, in particular, the vehicle computing device 106 (FIG. 1), and in particular, the processor 310 (FIG. 3) of the vehicle computing device 106 (FIG. 1), may identify at least one cause of noise in the vehicle audio system 100 (FIG. 1). For example, the processor may generate acoustic output within the vehicle. The processor may receive acoustic input from one or more microphones, for example, from the integrated microphones and/or from the binaural microphones. The acoustic input may be received through a single audio channel or through multiple audio channels. The processor may then process the acoustic input to generate processed acoustic input, and the processed acoustic input may include a frequency response of the acoustic input. The processor may then compare the processed acoustic input to corresponding channel target input in order to determine at least one deviation between the processed acoustic input and the corresponding target channel input.

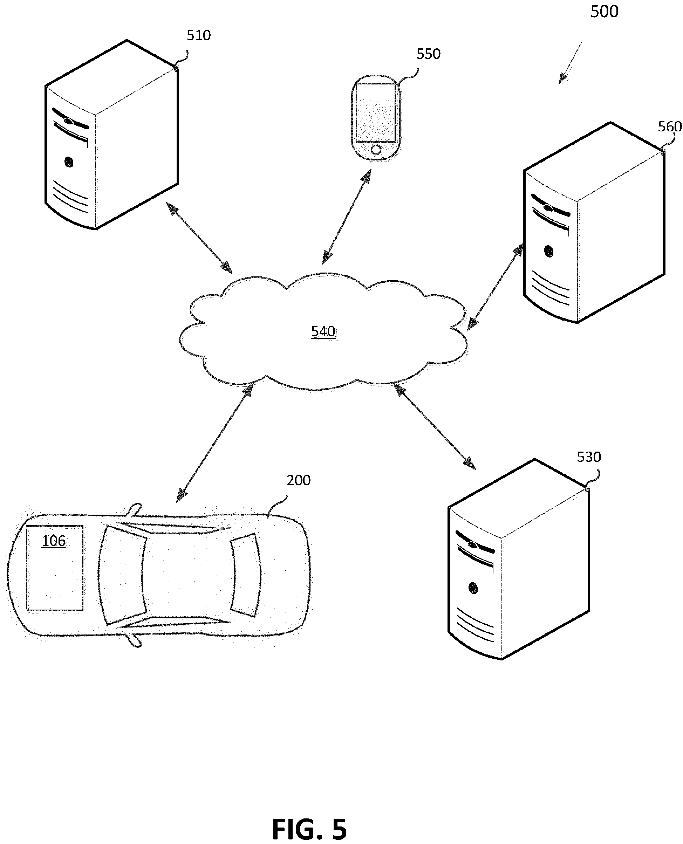

Reference is now made to FIG. 5, which illustrates a system 500 including a first database management system 510, a second database management system 530, a third database management system 560, a client device 550 and a vehicle 200 having a vehicle computing device 106, in communication via a network 540.

Each of the first database management system 510, the second database management system 530, the third database management system 560, the client device 550, and the vehicle 200 may be in geographically disparate locations. Put differently, one or more of first database management system 510, the second database management system 530, the third database management system 560, the client device 550, and the vehicle 200 may be remote to others of first database management system 510, the second database management system 530, the third database management system 560, the client device 550, and the vehicle 200.

The first database management system 510, the second database management system 530, the third database management system 560, the client device 550, and the vehicle computing device 106 are computer systems. Computer systems may be, for example, a mainframe computer, a minicomputer, or the like. Computer systems may include one or more computing devices. For example, a computer system may include multiple computing devices such as, for example, database servers, compute servers, and the like. The multiple computing devices may be in communication using a computer network. For example, computing devices may communicate using a local-area network (LAN). In some embodiments, computer systems may include multiple computing devices organized in a tiered arrangement. For example, a computer system may include middle-tier and back-end computing devices. In some embodiments, a computer system may be a cluster formed of a plurality of interoperating computing devices.

The first database management system 510, the second database management system 530, and the third database management system 560 may each be a single server, multiple servers, a server farm, or any other such arrangement of computing devices to implement computing server-like functionality. In some embodiments, the first database management system 510, the second database management system 530, and the third database management system 560 may track, manage, and maintain a correspondence between a set of recorded causes and a corresponding set of resolved indications of cause. In some embodiments, the first database management system 510, the second database management system 530, and the third database management system 560 may track, manage, and maintain a set of discovered causes. The set of recorded causes, corresponding set of resolved indications of cause, and the set of discovered causes may be described as audio refinement data.

The first database management system 510, the second database management system 530, and the third database management system 560 may track, manage, and maintain a target channel input. The target channel input may include measurements defining acceptable operating parameters for a plurality of vehicle audio channels for a plurality of vehicle types. The corresponding target channel input may originate from theoretical data, prototype reference measurements, or on a combination of theoretical and prototype reference measurements.

The audio refinement data and the target channel input may be represented in a database. For example, the first database management system 510 may be coupled to a first database which may be provided in secure storage, the second database management system 530 may be coupled to a second database which may also be provided in secure storage, and the third database management system 560 may be coupled to a third database which may also be provided in secure storage. The secure storage(s) may be provided internally within the first, second and third database management systems 510, 530, 560 or externally. The secure storage(s) may, for example, be provided remotely from the first, second and third database management systems 510, 530, 560. For example, the secure storage(s) may include one or more data centers. The data centers may, for example, store data with bank-grade security.

The client device 550 is also a computing device. In some embodiments, the client device 550 may, as illustrated, be a personal computer such as a smart phone. However, the client device 550 may be a computing device of another type such as a laptop computer, a desktop computer, a tablet computer, a notebook computer, a hand-held computer, a personal digital assistant, a portable navigation device, a mobile phone, a wearable computing device (e.g., a smart watch, a wearable activity monitor, wearable smart jewelry, and glasses and other optical devices that include optical head-mounted displays), an embedded computing device (e.g., in communication with a smart textile or electronic fabric), and any other type of computing device that may be configured to store data and software instructions, and execute software instructions to perform operations consistent with disclosed embodiments. In certain embodiments, the client device 550 may be associated with one or more users. The one or more users may be associated with the vehicle, for example, the user may be the owner of the vehicle, a driver of the vehicle, and/or a technician involved with the maintenance of the vehicle.

As mentioned above, the first database management system 510 may store audio refinement data. The audio refinement data stored by the first database management system may be described as primary audio refinement data. The primary audio refinement data may include a primary set of resolved indications of cause and a corresponding primary set of recorded causes. The primary set of resolved indications of cause and the primary set of recorded causes may be stored, for example, in one or more databases. The primary set of resolved indications of cause may include types of variation in processed acoustic input, such as variations in frequency response and variations in time domain response. The primary set of recorded causes may relate to mechanical and/or electrical matters in connection with a vehicle. For example, the primary set of recorded causes may include one or more of an electrical and/or mechanical component, one or more locations in a vehicle of the one or more components, and one or more alterations associated with the component.

The primary sets of resolved indications of cause and the corresponding primary sets of recorded causes may be categorized by a type of vehicle to which they relate. For example, a first primary set of resolved indications of cause and a corresponding first primary set of resolved causes may relate to a first vehicle type. A second primary set of resolved indications of cause and a corresponding second primary set of resolved causes may relate to a second vehicle type. An Nth primary set of resolved indications of cause and a corresponding Nth primary set of resolved causes may relate to an Nth vehicle type.

The primary audio refinement data stored by the first database management system 510 may also include one or more primary sets of discovered causes. The primary sets of discovered causes may be categorized by a type of vehicle to which they relate. For example, a first primary set of discovered causes may relate to a first vehicle type. An Nth primary set of discovered causes may relate to an Nth vehicle type. The one or more primary sets of discovered causes may include types of variation in processed acoustic input, such as variations in frequency response and variations in time domain response. Each member of a primary set of discovered causes may be distinct from the members of the primary set of resolved causes associated with the same vehicle type.

The second and third database management systems 530, 560 may store subsidiary audio refinement data including subsidiary sets of resolved indications of cause and corresponding subsidiary sets of recorded causes. The subsidiary sets of resolved indications of cause and the subsidiary sets of recorded causes may be stored, for example, in one or more databases. The subsidiary sets of resolved indications of cause may include types of variation in processed acoustic input, such as variations in frequency response and variations in time domain response. The subsidiary sets of recorded causes may relate to mechanical and/or electrical matters in connection with a vehicle. For example, the subsidiary sets of recorded causes may include one or more of an electrical and/or mechanical component, one or more locations in the vehicle of the one or more components, and one or more alterations associated with the component.

The subsidiary audio refinement data stored by the second and third database management systems 530, 560 may include one or more subsidiary sets of discovered causes. The subsidiary sets of discovered causes may be categorized by a type of vehicle to which they relate. For example, a first subsidiary set of discovered causes may relate to a first vehicle type. A Nth subsidiary set of discovered causes may relate to an Nth vehicle type. The subsidiary sets of discovered causes may include types of variation in processed acoustic input, such as variations in frequency response and variations in time domain response. Each member of a subsidiary set of discovered causes may be distinct from the members of the subsidiary set of resolved causes associated with the same vehicle type.

The second database management system 530 may be associated with a first vehicle manufacturer, and the first vehicle manufacturer may be associated with a plurality of vehicle types. The third database management system 560 may be associated with a second vehicle manufacturer, and the second vehicle manufacturer may be also associated with a plurality of vehicle types. As a result, the subsidiary audio refinement data stored by each of the second database management system 530 and the third database management system 560 may be distinct. That is, the subsidiary audio refinement data stored by the second database management system 530 may relate to vehicles associated with the first vehicle manufacturer, and the subsidiary audio refinement data stored by the third database management system 506 may relate to vehicles associated with the second vehicle manufacturer.

In some embodiments, the subsidiary audio refinement data stored by the second and third database management systems 530, 560 may be used to update the primary audio refinement data stored by the first database management system 510. For example, the second and third database management systems 530, 560 may periodically communicate with the first database management system 510 to augment the primary audio refinement data with the subsidiary audio refinement data.

The second and third database management systems 530, 560 may store target channel input. The target channel input may include measurements defining acceptable operating parameters for a plurality of vehicle audio channels for a plurality of vehicle types. The target channel input stored by the second database management server may relate to vehicles associated with a first vehicle manufacturer and the target channel input stored by the third database management server may relate to vehicles associated with a second vehicle manufacturer.

As noted, the vehicle 200 may include a vehicle audio system 100 (FIG. 1) having a vehicle computing device 106. In some embodiments, the vehicle computing device 106 may operate to generate acoustic output and receive acoustic input through each audio channel of the vehicle audio system 100 (FIG. 1). In some embodiments, the vehicle computing device 106 may further operate to process the acoustic input and to compare the processed acoustic input to corresponding target channel output. In some embodiments, the vehicle computing device 106 may operate to determine at least one deviation between the processed acoustic input and a corresponding target channel input.

The corresponding target channel input may be retrieved from the first, second and/or third database management systems 510, 530, 560. Additionally or alternatively, the corresponding target channel input may be retrieved from a storage of the vehicle computing device 106. The corresponding target channel input may define acceptable operating parameters for each audio channel of the vehicle audio system. The corresponding target channel input may include acceptable operating bandwidths for each audio channel and/or acceptable frequency response values for each audio channel. The corresponding target channel input may originate from theoretical data, prototype reference measurements, or on a combination of theoretical and prototype reference measurements.

The vehicle computing device 106 may communicate with the first database management system 510 to compare the at least one deviation with a corresponding set of resolved indications of cause. For example, the vehicle computing device 106 may communicate with the first database management system 510 to compare the at least one deviation with the set of resolved indications of cause associated with the type of vehicle to which the vehicle 200 belongs. For example, if vehicle 200 is a vehicle type A, the computing device may operate to compare the at least one deviation to the set of resolved indications of cause associated with vehicle type A.

When the vehicle computing device 106 discovers a degree of similarity between the at least one deviation and at least one of the set of resolved indications of cause, the vehicle computing device 106 may operate to identify at least one recorded cause corresponding to the identified at least one of the set of resolved indications of cause. The vehicle computing device 106 may then generate a report identifying the at least one recorded cause and store the report in a memory.

The vehicle computing device may also provide the identified at least one recorded cause for display. The identified at least one recorded cause may be displayed in a variety of ways. For example, the identified at least one recorded causes may be displayed on one or more of the vehicle computing device 106 and/or the client device 550.

In some implementations, the vehicle computing device 106 may determine that the at least one deviation does not correspond to any of the sets of resolved indications of cause. The vehicle computing device 106 may then store the at least one deviation in a set of discovered indications of cause. The set of discovered indications of cause may be stored, for example, in the first, second and/or third database management systems 510, 530, 560.

The vehicle computing device 106 may communicate with the first database management system 510 to add the at least one deviation to the set of discovered indications of cause associated with the vehicle type associated with the vehicle 200. In some implementations where the second database management system 530 is associated with the manufacture of vehicle 200, the vehicle computing device 106 may communicate with the second database management system 530 to add the at least one deviation to the subsidiary set of discovered indications of cause associated with the vehicle type associated with the vehicle 200. In some implementations where the third database management system 560 is associated with the manufacture of vehicle 200, the vehicle computing device 106 may communicate with the third database management system 560 to add the at least one deviation to the subsidiary set of discovered indications of cause associated with the vehicle type associated with the vehicle 200.

The second and third database management systems 530, 560 may periodically receive and store new audio refinement data. The new audio refinement data may include new resolved indications of cause and associated recorded causes. The new resolved indications of cause and associated recorded causes may be added to the subsidiary audio refinement data stored by the second and third database management systems 530, 560. The new audio refinement data may also include new discovered causes. The new discovered causes may be added to the subsidiary audio refinement data stored by the second and third database management systems 530, 560. The new audio refinement data may be received, for example, from the client device 550, the vehicle computing device 106 and/or from the first database management system 510.

In some embodiments, the first database management system 510 may periodically receive and store new audio refinement data. The new audio refinement data may include new resolved indications of cause and associated recorded causes. The new resolved indications of cause and associated recorded causes may be added to the primary audio refinement data stored by the first database management systems 510. The new audio refinement data may also include new discovered causes. The new discovered causes may be added to the audio refinement data stored by the first database management system 510. The new audio refinement data may be received, for example, from the client device 550, the vehicle computing device 106, the second database management system 530 and/or the third database management system 560.

In some embodiments, the client device 550 may communicate with the first database management system 510 and/or the second database management system 530 and/or the third database management system 560 to access primary and/or subsidiary audio refinement data. The client device 550 may store target channel input. The target channel input may define acceptable operating parameters for a plurality of vehicle audio channels for a plurality of vehicles.

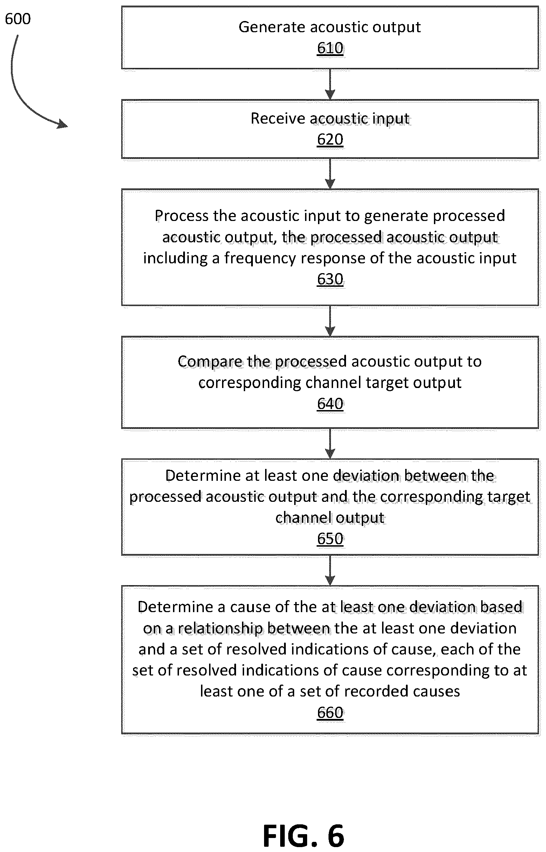

Reference is now made to FIG. 6, which illustrates, in flowchart form, a method 600 of identifying at least one cause of noise in a vehicle audio system, in accordance with an example of the present application. The method 600 includes operations that are carried out by one or more processors of the vehicle audio system. The method 600 may be implemented, at least in part, through processor-executable instructions. In some examples, one or more of the operations may be implemented via processor-executable instructions in other applications or in an operating system stored and executed in memory of the vehicle audio system. As described, the vehicle audio system may be installed in a vehicle having integrated microphones. Additionally or alternatively, the vehicle audio system may be configured to include a pair of binaural microphones. In some implementations, the binaural microphones may be considered as a single point in the generation of an audio channel.

At operation 610, the processor generates acoustic output. In some embodiments, the acoustic output may be generated through all of the loudspeakers. Alternatively, in some embodiments, the acoustic output may be generated through a single channel, such as a first audio channel. In some embodiments, the processor may generate acoustic output through each channel in series to create a series of single-channel acoustic output.

At operation 620, the processor receives acoustic input. The acoustic input may correspond to the sound coming from one or more of the loudspeakers 104 (FIG. 2) and going to one or more of the microphones 102 (FIG. 2). As one example, with reference to FIG. 2, acoustic output associated with the first loudspeaker 104a and the binaural microphones 102ij may be received.

At operation 630, the processor processes the acoustic input to generate processed acoustic input, the processed acoustic input including a frequency response of the acoustic input. In some embodiments, the processed acoustic input may also include a time domain response of the acoustic input.

At operation 640, the processor compares the processed acoustic input to corresponding channel target input. The corresponding target channel input may represent ideal or acceptable channel conditions.

The corresponding target channel input may originate from theoretical data, testing performed on prototype vehicles, or on a combination of theoretical and prototype data. The corresponding target channel input may provide acceptable operating parameters for the channel, and the acceptable operating parameters may be described as a window of performance. In some embodiments, satisfaction of the window of performance by the processed acoustic input may effect a determination that the corresponding acoustic channel is in an acceptable operating condition. In some such scenarios, the processor may indicate that the corresponding channel has received an evaluation of "pass", and the processor may forgo the remaining operations of the method 600 for the corresponding channel. However, in some implementations, some or all of the processed acoustic input may fall outside of the window of performance. In some such scenarios, the processor may indicate that the corresponding acoustic channel has received an evaluation of "fail" and the processor may proceed to the operation 650.

At the operation 650, the processor determines at least one deviation between the processed acoustic input and the corresponding target channel input. The at least one deviation may take several forms. For example, the processed acoustic input may contain points or regions within one or both of the frequency domain and of the time domain that are outside of the window of performance defined by the corresponding target channel input.

At the operation 660, the processor determines a cause of the at least one deviation based on a relationship between the at least one deviation and a set of resolved indications of cause, each of the set of resolved indications of cause corresponding to at least one of a set of recorded causes.

In some embodiments, the processor may compare the at least one deviation to a set of resolved indications of cause. The set of resolved indications of cause may reside, for example, in a database. The database may be located in the memory of the computing device, and/or the database may be located in, or be in communication with, one or more of the first, second and third database management systems 510, 530, 560 of FIG. 1. The database may map one or more indications of the set of resolved indications of cause to one or more recorded causes. The recorded causes may be mechanical and/or electrical in nature.

For example, an indication of a sound performance level (SPL) greater than 6dB without a noticeable difference (+/- 15ms) in group delay may map to a recorded cause of faulty fuel pump wiring. As another example, an indication of group delay greater than +/- 50ms in low frequency, and an indication of a narrow peak between 700Hz-2100Hz may be mapped to a recorded cause of a loose screw/washer assembly.

When the vehicle computing device 106 discovers a degree of similarity between the at least one deviation and at least one of the set of resolved indications of cause, the vehicle computing device 106 may operate to identify at least one recorded cause corresponding to the identified at least one of the set of resolved indications of cause. The vehicle computing device 106 may then generate a report identifying the at least one recorded cause and store the report in a memory.

The vehicle computing device may also provide the identified at least one recorded cause for display. The identified at least one recorded cause may be displayed in a variety of ways. For example, the identified at least one recorded causes may be displayed on one or more of the vehicle computing device 106 and/or the client device 550.

Subsequent to determining a cause of the at least one deviation, the processor may generate a report documenting the at least one deviation, the corresponding one or more recorded deviations and/or the at least one of the sets of recorded causes. The processor may then store the report in memory. The report may be transmitted to the first database management system 510 of FIG. 5, the second and/or the third database management systems 530, 560 of FIG. 5, and/or the client device 550 of FIG. 5. The client device 550 of FIG. 5 may be associated with an owner of the vehicle and/or a seller of the vehicle, for example.

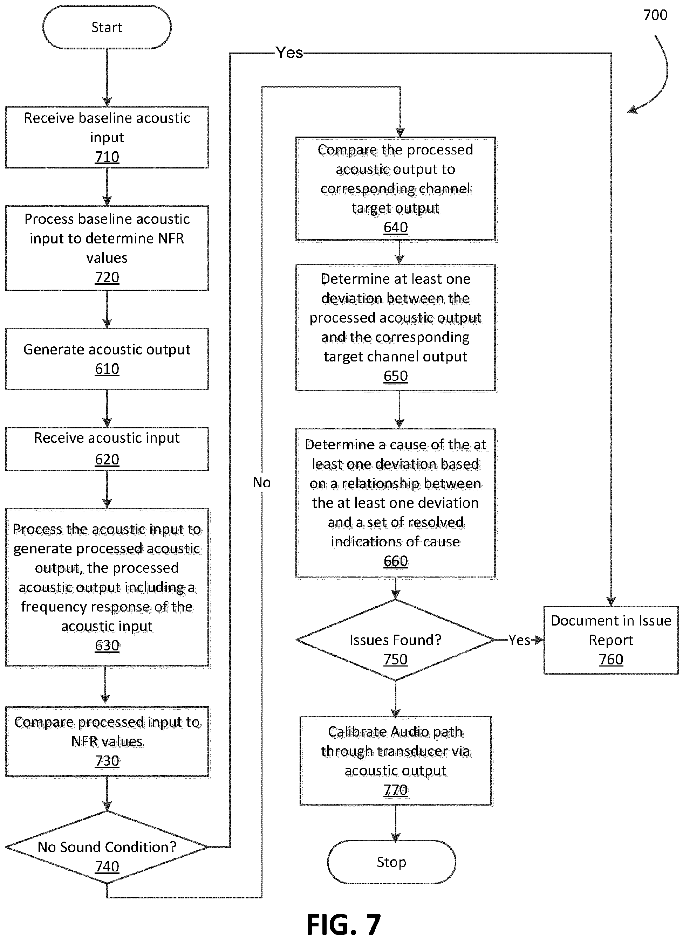

Reference is now made to FIG. 7, which illustrates a flowchart 700 in connection with another aspect of the present application.

The flowchart 700 shows a series of operations surrounding and including the operations of the method 600 of FIG. 6. The flowchart 700 includes operations that are carried out by one or more processors of the vehicle audio system. The flowchart 700 may be implemented, at least in part, through processor-executable instructions. In some examples, one or more of the operations may be implemented via processor-executable instructions in other applications or in an operating system stored and executed in memory of the vehicle audio system. As described, the vehicle audio system may be installed in a vehicle having integrated microphones. Additionally or alternatively, the vehicle audio system may be configured to include a pair of binaural microphones. In some implementations, the binaural microphones may be considered as a single point in the generation of an audio channel.

At the operation 710, the processor receives baseline acoustic input. The baseline acoustic input is received in the absence of generating acoustic output. In this way, the baseline acoustic input may represent the existing noise of the vehicle audio system.

At operation 720, the processor processes the baseline acoustic input to produce processed baseline acoustic input. The processed baseline acoustic input is used to determine Noise Floor Reduction (NFR) values. NFR values represent the existing internal noise of the vehicle. The processed baseline acoustic input may include a frequency response of the baseline acoustic input. In some embodiments, the processed baseline acoustic input may also include a time domain response of the baseline acoustic input. The processed baseline acoustic input may be described as NFR acoustic input and the NFR acoustic input may comprise NFR values.

At operation 610, the processor generates acoustic output. As previously described with reference to FIG. 6, in some embodiments, the acoustic output may be generated through all of the loudspeakers. Alternatively, in some embodiments, the acoustic output may be generated through a single channel, such as through a first audio channel. In some embodiments, the processor may generate acoustic output through each channel in series to create a series of single-channel acoustic output.

At operation 620, the processor receives acoustic input. As described with reference to FIG. 6, the acoustic input may correspond to acoustic input generated through all of the loudspeakers. Alternatively, in some embodiments, the acoustic input may be generated through a single channel, such as a first audio channel. In some embodiments, the acoustic input may be a series of single-channel acoustic output. Each of the series of single-channel acoustic input may correspond to the sound associated with a distinctive pair of points, *i.e.,* a distinctive pair of a single microphone and a single loudspeaker.

At operation 630, as previously described with reference to FIG. 6, the processor processes the received acoustic input. The processed acoustic input may include a frequency response of the baseline acoustic input. In some embodiments, the processed acoustic input may also include a time domain response of the acoustic input. In some embodiments, the processed acoustic input may correspond to acoustic input received through all of the loudspeakers. In some embodiments, the processed acoustic input may be a series of processed single-channel acoustic input. In such embodiments, each of the series of processed single-channel acoustic input may correspond to the sound associated with a distinctive pair of points, *i.e.,* a distinctive pair of a single microphone and a single loudspeaker.

At operation 730, the processor compares the processed acoustic input to the NFR acoustic input. In some embodiments, the comparison may include comparing the processed acoustic input for each audio channel to the NFR values for each corresponding audio channel. As noted, the processed acoustic input may include the frequency response for each audio channel. In some embodiments, comparing the frequency response for each audio channel to the NFR values of the corresponding audio channel may be used to determine a no sound condition for the corresponding audio channel.

The comparison of the processed acoustic input for each audio channel to the NFR values of the corresponding audio channel may take a variety of forms. In some implementations, the comparison may include the following algorithm:

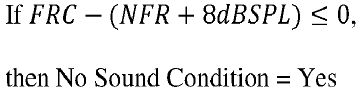

At the operation 740, the processor determines whether a no sound condition exists. Determining a no sound condition may include determining the presence of sound within the acoustic input received through all of the loudspeakers. Alternatively, in some embodiments, determining a no sound condition may include determining the presence of sound within at least one of the series of single-channel acoustic input.

When the processor determines that a no sound condition exists, operation proceeds operation 760.

At operation 760, the processor documents one or more issues in a report. For example, the processor may document the existence of a no sound condition in one or more vehicle audio channels.

When the processor determines that a no sound condition does not exist, operation proceeds to operation 640.

As previously described with reference to FIG. 6, at operation 640, the processor compares the processed acoustic input to the corresponding target channel input. The corresponding target channel input may represent ideal or acceptable channel conditions. The corresponding target channel input may originate from theoretical data, prototype reference measurements, or on a combination of theoretical and prototype reference measurements. The corresponding target channel input may provide acceptable operating parameters for the channel, and the acceptable operating parameters may be described as a window of performance. In some embodiments, satisfaction of the window of performance by the processed acoustic may effect a determination that the corresponding acoustic channel is in an acceptable operating condition. In some such scenarios, the processor may indicate that the corresponding channel has received an evaluation of "pass", and the processor may forgo the remaining operations of the flowchart 700 for the corresponding channel. However, in some implementations, some or all of the processed acoustic input may fall outside of the window of performance. In some such scenarios, the processor may indicate that the corresponding acoustic channel has received an evaluation of "fail" and the processor may proceed to the operation 650.

At the operation 650, as previously described with reference to FIG. 6, the processor determines at least one deviation between the processed acoustic input and the corresponding target channel input. The at least one deviation may take several forms. For example, the processed acoustic input may contain points or regions within one or both of the frequency domain and of the time domain that are outside of the window of performance defined by the corresponding target channel input.

At the operation 660, as previously described, the processor determines a cause of the at least one deviation based on a relationship between the at least one deviation and a set of resolved indications of cause, each of the set of resolved indications of cause corresponding to at least one of a set of recorded causes.

In some embodiments, the processor may compare the at least one deviation to a set of resolved indications of cause. The set of resolved indications of cause may reside, for example, in a database. The database may be located in the memory of the computing device, and/or the database may be located in, or be in communication with, one or more of the first, second and third database management systems 510, 530, 560 of FIG. 5. The database may map one or more indications of the set of resolved indications to one or more recorded causes. The recorded causes may be mechanical and/or electrical in nature.

For example, an indication of a sound performance level (SPL) greater than 6dB without a noticeable difference (+/- 15ms) in group delay may map to a recorded cause of faulty fuel pump wiring. As another example, an indication of group delay greater than +/-50ms in low frequency, and an indication that there is a narrow peak between 700Hz-2100Hz may be mapped to a recorded cause of a loose screw/washer assembly.

In some implementations, the processor may identify one or more of the set of resolved indications of cause having a degree of similarity to the one or more deviations. The processor may then operate to identify at least one recorded cause corresponding to the identified at least one of the set of resolved indications of cause. The processor may store the identified at least one of the set of resolved indications of cause in a memory.

In some implementations, the processor may fail to identify one or more recorded causes having a degree of similarity to the at least one deviation.

After operation 660, operation proceeds to operation 750.

At operation 750, the processor determines whether one or more issues have been found. In some embodiments, determining whether one or more issues have been found corresponds to determining whether at least one deviation has been identified. Where one or more issues have been found, operation proceeds to operation 760.

At operation 760, the processor documents one or more issues in a report. For example, the processor may document one or more deviations between the processed acoustic input and the corresponding target channel input. In some implementations where the processor has identified one or more resolved causes associated with the one or more derivations, the one or more causes may be documented.

In some implementations, the processor may identify one or more deviations, yet may not have identified one or more corresponding resolved causes. As a result, in some embodiments, the processor may identify the one or more deviations as one or more discovered causes and may document the one or more discovered causes in the report.

Where the processor has not found any issues, operation proceeds to operation 770.

At operation 770, the processor calibrates the vehicle audio system.

As previously described, in some embodiments, the first, second, and third database management servers track, manage, and maintain a correspondence between a set of recorded causes and a corresponding set of resolved indications of cause. In some embodiments, the first database management system, the second database management system, and the third database management system may track, manage, and maintain a set of discovered causes. The set of recorded causes, corresponding set of resolved indications of cause, and the set of discovered causes may be described as audio refinement data.

The audio refinement data may be updated in a variety of ways. In some embodiments, the vehicle computing device 106 (FIG. 1), may periodically receive additional audio refinement data. The vehicle computing device 106 (FIG. 1) may store the additional refinement data. Additionally or alternatively, the vehicle computing device 106 (FIG. 1) may transmit the additional audio refinement data to the first, second, and/or third database management systems 510, 530, 560 (FIG. 5). The first, second and third database management systems 510, 530, 560 (FIG. 5) may each store the additional auto refinement data.

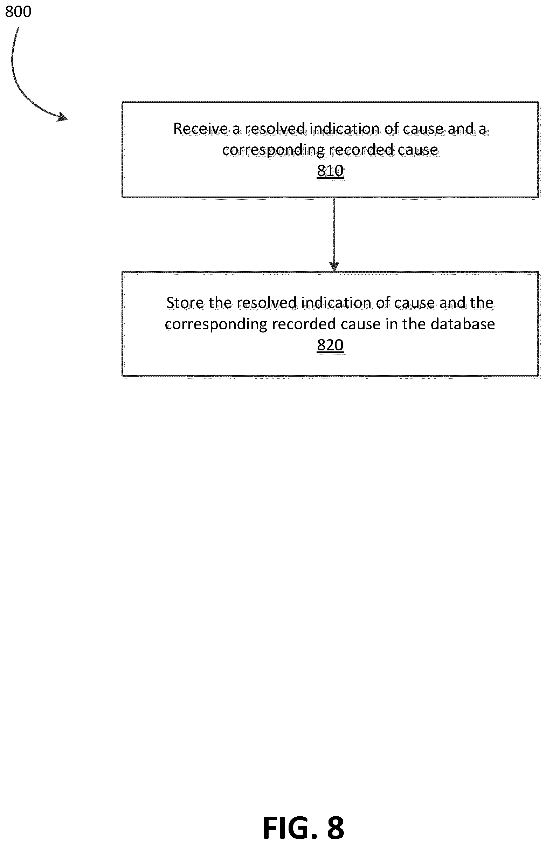

Reference is now made to FIG. 8, which illustrates a method 800 method of receiving and storing a resolved indication of known cause and a corresponding recorded cause, in accordance with an example of the present application.

At operation 810, prior to generating acoustic output, the processor receives a resolved indication of known cause and a corresponding recorded cause.

At operation 820, the processor stores the resolved indication of known cause and the corresponding recorded cause in the database.

Example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A system for identifying at least one cause of noise in a vehicle audio system, the vehicle audio system including a plurality of audio channels, the system comprising:
one or more microphones;
a processor;
a memory storing processor executable instructions that, when executed by the processor, cause the processor to
generate acoustic output; and
for each channel of the plurality of audio channels:
receive, from the one or more microphones, acoustic input;
process the acoustic input to generate processed acoustic input, the processed acoustic input including a frequency response of the acoustic input;
compare the processed acoustic input to corresponding target channel input;
determine at least one deviation between the processed acoustic input and the corresponding target channel input; and
determine a cause of the at least one deviation based on a relationship between the at least one deviation and a set of resolved indications of cause, each of the set of resolved indications of cause corresponding to at least one of a set of recorded causes.

2. The system of claim 1, wherein the one or more microphones are a pair of binaural microphones.

3. The system of claim 1 or 2, wherein the processor is further caused to:
identify at least one of the set of resolved indications of cause corresponding to the at least one deviation; and
identify at least one of the set of recorded causes corresponding to the at least one of the set of resolved indications of cause.

4. The system of claim 3, wherein the processor is further caused to:
generate a report identifying the at least one of the set of recorded causes; and
store the report in a memory.

5. The system of claim 1 or 2, wherein the processor is further caused to:
determine that the at least one deviation does not correspond to any of the set of resolved indications of cause; and
store the at least one deviation in a set of discovered indications of cause.

6. The system of any one of claims 1 to 5, wherein the set of resolved indications of cause and the set of recorded causes are stored in a database, and wherein the processor is further caused to:
prior to generating acoustic output, receive a resolved indication of cause and a corresponding recorded cause; and
store the resolved indication of cause and the corresponding recorded cause in the database.

7. The system of any one of claims 1 to 6, wherein the processor is further caused to:
prior to processing the acoustic input to generate processed acoustic input, determine an absence of a no sound condition.

8. The system of claim 7, wherein the processor is further caused to:
prior to generating acoustic output,
receive from one or more microphones, a reference acoustic input; and
process the reference acoustic input to generate processed reference acoustic input; the processed reference acoustic input including a Noise Floor Reduction (NFR); and
wherein the absence of a no sound condition is determined by comparing the frequency response of the acoustic input to the NFR.

9. The system of any one of claims 1 to 8, wherein processing the acoustic input includes
comparing the acoustic input to target acoustic input; and
optionally, wherein the target acoustic input is determined by prototype reference measurements.

10. A method for identifying at least one cause of noise in a vehicle audio system, the vehicle audio system including a plurality of audio channels, the method comprising:
through each channel of the plurality of audio channels:
generating acoustic output;
receiving, from one or more microphones, acoustic input;
processing the acoustic input to generate processed acoustic input, the processed acoustic input including a frequency response of the acoustic input;
comparing the processed acoustic input to corresponding target channel input;
determining at least one deviation between the processed acoustic input and the corresponding target channel input; and
determining a cause of the at least one deviation based on a relationship between the at least one deviation and a set of resolved indications of cause, each of the set of resolved indications of cause corresponding to at least one of a set of recorded causes.

11. The method of claim 10, further comprising:
identifying at least one of the set of resolved indications of cause corresponding to the at least one deviation; and
identifying at least one of the set of recorded causes corresponding to the at least one of the set of resolved indications of cause.

12. The method of claim 11, further comprising
generating a report identifying the at least one of the set of recorded causes; and
storing the report in a memory.

13. The method of claim 10, wherein the method further comprises:
determining that the at least one deviation does not correspond to any of the set of resolved indications of cause; and
storing the deviation in a set of indications of discovered cause; and/or
wherein the set of resolved indications of cause and the set of recorded causes are stored in a database, and the method further comprises:
prior to generating acoustic output, receiving a resolved indication of known cause and a corresponding recorded cause; and
storing the resolved indication of known cause and the corresponding recorded cause in the database.

14. The method of any one of claims 10 to 13, further comprising:
prior to processing the acoustic input to generate processed acoustic input, determining an absence of a no sound condition; and
optionally, further comprising:
prior to generating acoustic output,
receiving from one or more microphones, a reference acoustic input; and
processing the reference acoustic input to generate processed reference acoustic input; the processed reference acoustic input including a Noise Floor Reduction (NFR); and
wherein the absence of a no sound condition is determined by comparing the frequency response of the acoustic input to the NFR.

15. A non-transitory computer-readable storage medium storing instructions, that when executed by a processor cause the processor to:
generate acoustic output;
receive, from one or more microphones, acoustic input;
process the acoustic input to generate processed acoustic input, the processed acoustic input including a frequency response of the acoustic input;
compare the processed acoustic input to corresponding channel target input;
determine at least one deviation between the processed acoustic input and the corresponding target channel input; and
determine a cause of the at least one deviation based on a relationship between the at least one deviation and a set of resolved indications of cause, each of the set of resolved indications of cause corresponding to at least one of a set of recorded causes.
